# EUROPÄISCHE PATENTSCHRIFT

(11) **EP 2 606 239 B1**
(45) Veröffentlichungstag und Bekanntmachung des Hinweises auf die Patenterteilung: **05.04.2017**
(21) Anmeldenummer: 11754991.5
(22) Anmeldetag: 17.08.2011
(51) Int. Cl.: F15B 1/26

(54) **ÖLBEHÄLTER**
OIL CONTAINER
RÉSERVOIR D'HUILE

(30) Priorität: 21.08.2010 DE 102010035054
(43) Veröffentlichungstag der Anmeldung: 26.06.2013
(73) Patentinhaber: Robert Bosch GmbH, 70469 Stuttgart (DE)
(72) Erfinder: SCHÄFER, Oliver, 97783 Karsbach (DE); NEIDLEIN, Gunther, 97816 Lohr am Main (DE); KÜBER, Clemens, 97794 Rieneck (DE); PFENNIG, Julian, 97762 Hammelburg (DE)
(74) Vertreter: Wiesmann, Stephan
(86) Internationale Anmeldenummer: PCT/EP2011/004132
(87) Internationale Veröffentlichungsnummer: WO 2012/031670

(56) Entgegenhaltungen:
- DE-A1-102007 054 901
- DE-T2- 69 705 474

## Beschreibung

Die Erfindung betrifft einen Ölbehälter gemäß dem Oberbegriff des Patentanspruchs 1 und ein hydraulisches System mit einem derartigen Ölbehälter.

In der Druckschrift DE 10 2007 054 901 A1 ist eine derartiger aus Kunststoff gefertigter Ölbehälter gezeigt, der ein im Wesentlichen kreiszylindrisches Gehäuse hat, wobei am Boden ein Eingangsanschluss und ein Ausgangsanschluss angeordnet sind. Im Gehäuse ist ein Leitelement aufgenommenen, wodurch ein zumindest ansatzweise schnecken- bzw. spiralförmiger Strömungskanal zur Entgasung des Öls gebildet ist. Der Strömungskanal verläuft von einem etwa mittig am Boden angeordneten Eingangsanschluss zu einem außermittig am Boden angeordneten Ausgangsanschluss.

Weiterhin ist ein Ölfilter in das Gehäuse eingesetzt, der einen entsprechenden Bauraum benötigt und auch eine gewisse Einbaulage des gesamten Ölbehälters erfordert.

Nachteilig an derartigen Ölbehältern aus Kunststoff sind insbesondere ihre geringe Stabilität und ihre Entflammbarkeit.

Die DE 697 05 474 T2 offenbart ein Reservoir für Hydraulikflüssigkeit mit Entgasungsfunktion, das einen unter Kammer und eine obere zusätzliche Kammer aufweist. Das Reservoir ist aus Blech gefertigt.

Dem gegenüber liegt der Erfindung die Aufgabe zu Grunde, einen Ölbehälter zu schaffen, der (dem gegenüber) eine korrekte Messung des Füllstandes auch in einer geneigten Einbau- bzw. Betriebslage des Ölbehälters ermöglicht.

Diese Aufgabe wird gelöst durch einen Ölbehälter mit den Merkmalen des Patentanspruchs 1 und durch ein hydraulisches System mit den Merkmalen des Patentanspruchs 10.

Der erfindungsgemäße Ölbehälter hat ein im Wesentlichen kreiszylindrisches Gehäuse, in dem zumindest ein Leitelement aufgenommen ist, wodurch ein zumindest ansatzweise spiralförmiger Strömungskanal zur Entgasung von Öl gebildet ist. Dabei verläuft der Strömungskanal von einem etwa mittig an einem Boden des Gehäuses angeordneten Eingangsanschluss zu einem außermittig am Boden angeordneten Ausgangsanschluss des Ölbehälters. Dabei sind das Gehäuse und das Leitelement aus Metall gefertigt, so dass der Ölbehälter eine Stabilität und Flammfestigkeit aufweist.

Dabei ist zumindest das eine Leitelement in einem Zentrifugalbereich angeordnet, der durch einen Zwischendeckel von einem Vorratsbereich getrennt ist. Der Zwischendeckel ist mit Durchgangsausnehmungen versehen.

Zur Überwachung bzw. zur Prüfung der Füllmenge des Ölbehälters ist ein elektrischer Füllstandssensor zumindest abschnittsweise mittig im Vorratsbereich im Gehäuse angeordnet. Der Füllstandssensor ist vorzugsweise am Deckel befestigt. Die erfindungsgemäße mittige Anordnung des Füllstandssensors im zylindrischen Vorratsbereich ermöglicht eine korrekte Messung des Füllstandes auch in einer geneigten Einbau- bzw. Betriebslage des Ölbehälters.

Weitere vorteilhafte Ausgestaltungen der Erfindung sind in den abhängigen Patentansprüchen beschrieben.

Bei einer besonders bevorzugten Weiterbildung des erfindungsgemäßen Ölbehälters sind der Eingangsanschluss oder der Ausgangsanschluss von einer an den Boden geschweißten Standard-Flanschverbindung oder von einem an den Boden geschweißten Ring mit Innengewinde gebildet. Damit ist ein besonders haltbarer und vibrationsbeständiger Anschluss von entsprechenden Leitungen an den Ölbehälter möglich.

Bei einer fertigungstechnisch einfachen Weiterbildung hat das Gehäuse einen Mantel, der von einem gebogenen Blech gebildet ist, das ursprünglich eine etwa rechteckige Form hatte. Die beiden kurzen Seiten des Blechs sind über eine Schweißnaht miteinander verbunden, während die beiden langen Seiten mit dem Boden bzw. mit einem Deckel des Gehäuses verschweißt sind.

Eine besonders feste Verbindung des erfindungsgemäßen Ölbehälters mit einem hydraulischen System - insbesondere ein hydraulisches System einer mobilen Arbeitsmaschine - ergibt sich, wenn eine Halterung über die gesamte Höhe des Gehäuses an dieses geschweißt ist.

Eine besonders feste Verbindung zwischen dem Gehäuse und der Halterung wird durch zwei Abschnitte der Halterung erreicht, die mit dem Boden bzw. mit dem Deckel überlappen.

Bei einer bevorzugten Weiterbildung ist die Halterung im Bereich der Schweißnaht des Gehäuses angeordnet und hat zwei parallel zur Schweißnaht angeordnete im Querschnitt etwa L-förmige Hauptabschnitte und zwei Streben. Dabei sind die beiden überlappenden Abschnitte und die beiden Streben quer zu den beiden Hauptabschnitten und quer zur Schweißnaht angeordnet.

Bei einer bevorzugten Weiterbildung ist im Zentrifugalbereich benachbart zum Eingangsanschluss ein Einlaufverteilerkäfig angeordnet, der von dem zumindest einen Leitelement umfasst ist. Der Einlaufverteilerkäfig liegt somit im Strömungspfad hinter dem Eingangsanschluss und vor dem zumindest einen Leitelement.

Zur Überwachung bzw. zur Prüfung der Füllmenge des Ölbehälters kann ein durchsichtiger Glasabschnitt im Bereich des Vorratsbereichs im Gehäuse angeordnet werden.

Vorzugsweise ist im Deckel ein Lüftungsfilter zur Be- und Entlüftung des Gehäuses angeordnet, über den der Druck oder das Öl im Gehäuse mit etwa 0,2 bar gegenüber der Umgebung vorgespannt wird, und der ein Nachsaugen von Luft aus der Umgebung ermöglicht.

Das erfindungsgemäße hydraulische System hat einen Ölbehälter gemäß einem der vorhergehenden Absätze. Es hat weiterhin einen dem Eingangsanschluss vor geschalteten Rücklauffilter, der vorzugsweise ein Leitungsfilter ist. Ein solcher externer Filter kann an einer gut erreichbaren Stelle des hydraulischen Systems unabhängig vom Ölbehälter angeordnet werden. Damit ist die Filterwartung erleichtert.

Im Folgenden wird anhand der Figuren ein Ausführungsbeispiel der Erfindung detailliert beschrieben. Es zeigen:
Figur 1 ein Ausführungsbeispiel eines erfindungsgemäßen Ölbehälters in einer perspektivischen seitlichen Ansicht;
Figur 2 das Ausführungsbeispiel eines erfindungsgemäßen Ölbehälters in einer perspektivischen seitlichen Ansicht, wobei ein Gehäusemantel und ein Leitelement ausgeblendet sind; und
Figur 3 das Ausführungsbeispiel eines erfindungsgemäßen Ölbehälters in einer perspektivischen seitlichen Ansicht, wobei der Gehäusemantel ausgeblendet ist.

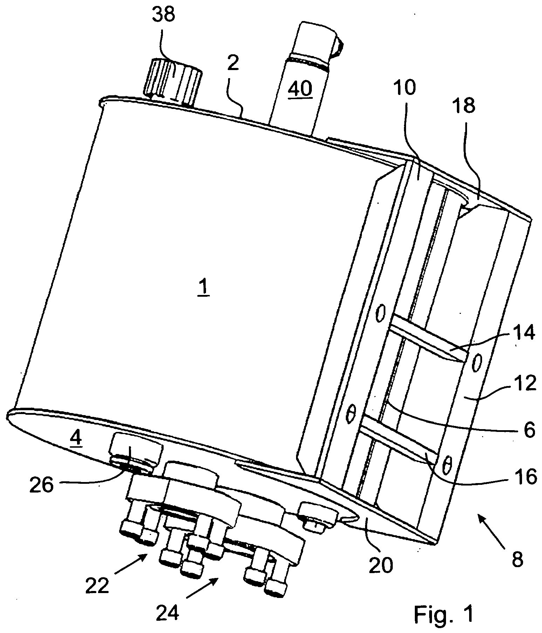

Figur 1 zeigt ein Ausführungsbeispiel eines erfindungsgemäßen Ölbehälters in einer perspektivischen seitlichen Ansicht. Ein Gehäuse des Ölbehälters besteht aus Blechen, und zwar aus einem zylindrischen Mantel 1, aus einem Deckel 2 und aus einem Boden 4. Der Mantel 1 hatte ursprünglich eine etwa rechteckige Form und wurde in die dargestellte zylindrische Form gebogen und danach an seinen beiden kurzen Seiten über eine Schweißnaht 6 verbunden.

Am Gehäuse 1, 2, 4 ist eine Halterung 8 angeschweißt, die zwei Hauptabschnitte 10, 12, zwei Streben 14, 16 und zwei überlappende Abschnitte 18, 20 hat. Die beiden Hauptabschnitte 10, 12 sind jeweils aus etwa L-förmigem Profilblech gefertigt und verlaufen beidseitig der Schweißnaht 6 über die gesamte Höhe des Gehäuses 1, 2, 4. Die beiden Streben 14, 16 verlaufen etwa rechtwinklig zu den Hauptabschnitten 10, 12 und zur Schweißnaht 6 und verstärken die Halterung 8.

Die beiden überlappenden Abschnitte 18, 20 sind flächig ausgebildet und verlaufen parallel zum zugeordneten Deckel 2 bzw. zum zugeordneten Boden 4. Sie haben jeweils einen bogenförmigen Abschnitt, der am Rand des Deckels 2 bzw. des Bodens 4 mit diesem überlappt und dort mit diesem verschweißt ist. Weiterhin sind die überlappenden Abschnitte 18, 20 etwa rechtwinklig zu den beiden Hauptabschnitten 10, 12 angeordnet.

Mittig am Boden 4 ist ein Eingangsanschluss 22, und außermittig am Boden 4 ist ein Ausgangsanschluss 24 angeordnet. Die beiden Anschlüsse 22, 24 sind durch an den Boden 4 geschweißte Standard-Flanschverbindungen gebildet. Weiterhin ist am Boden 4 ein Lecköl-Anschluss 26 angeordnet, der als Eingangsanschluss für Leckageöl dient.

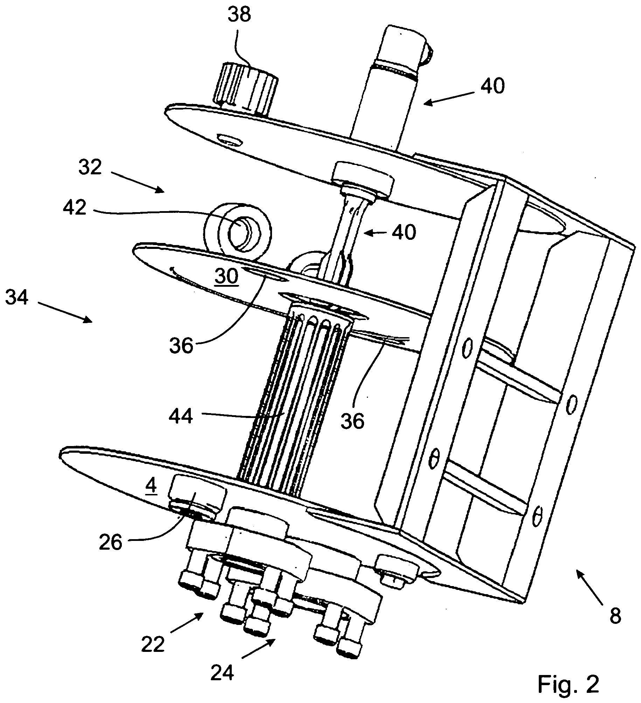

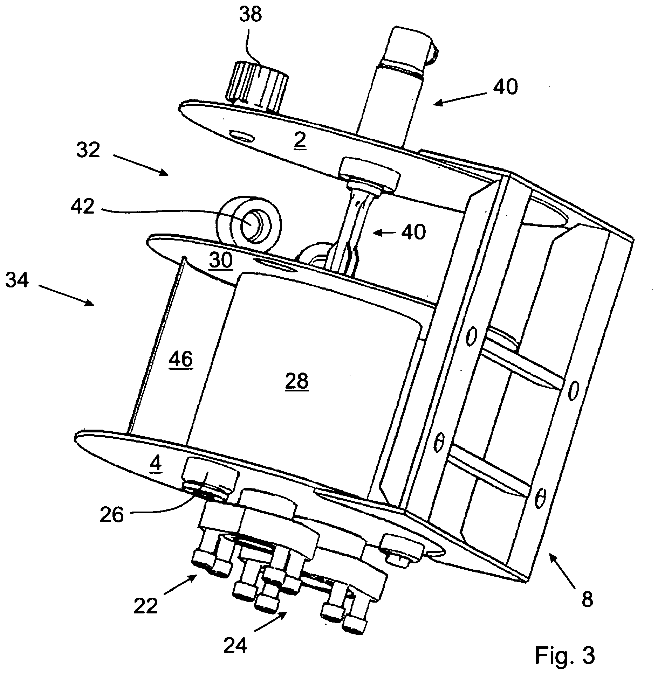

Figur 2 zeigt das Ausführungsbeispiel eines erfindungsgemäßen Ölbehälters in einer perspektivischen seitlichen Ansicht, wobei der Mantel 1 (vgl. Figur 1) und ein Leitelement (vgl. Figur 3) nicht gezeigt sind.

Im Innern des Gehäuses 1, 2, 4 ist etwa parallel zum Deckel 2 und zum Boden 4 ein Zwischendeckel 30 eingesetzt, der den Innenraum des Gehäuses1, 2, 4 in einen Vorratsbereich 32 und in einen Zentrifugalbereich 34 unterteilt. Der Zwischendeckel 30 ist mit Durchgangsausnehmungen 36 versehen, wodurch die beiden Bereiche 32, 34 in Verbindung stehen.

In den Deckel 2 ist ein Lüftungsfilter 38 eingesetzt, durch den ein Druck im Gehäuse 1, 2, 4 um etwa 0,2 bar gegenüber der Umgebung erhöht ist. Der Lüftungsfilter 38 ist ein Beund Entlüftungsfilter, der ein Nachsaugen von Luft aus der Umgebung ermöglicht.

Weiterhin ist mittig in den Deckel 2 ein elektrischer Füllstandssensor 40 eingesetzt, der in den Vorratsbereich 32 hineinragt. Durch den Füllstandssensor 40 kann der Füllstand des Öls im Gehäuse bestimmt werden.

Weiterhin ist im (in Figur 2 nicht gezeigten) Mantel 1 ein Auge mit einem durchsichtigen Glasabschnitt 42 eingesetzt, über das ebenfalls der Füllstand des Öls im Gehäuse 1, 2, 4 bestimmt werden kann.

Mittig im Zentrifugalbereich 34 ist ein etwa zylinderförmiger Einlaufverteilerkäfig 44 angeordnet. Über den Eingangsanschluss 22 in den Zentrifugalbereich 34 hineinströmendes Öl wird bei der Durchströmung des Einlaufverteilerkäfigs 44 an dessen Umfang verteilt.

Figur 3 zeigt das erste Ausführungsbeispiel eines erfindungsgemäßen Ölbehälters in einer perspektivischen seitlichen Ansicht, wobei der Mantel 1 (vgl. Figur 1) ausgeblendet ist.

Zwischen dem Einlaufverteilerkäfig 44 (vgl. Figur 2) und dem Mantel 1 (vgl. Figur 1) ist ein Leitelement 28 angeordnet, dessen Höhe derjenigen des Zentrifugalbereichs 34 entspricht. Das Leitelement 28 ist ebenfalls aus Blech gefertigt und mit dem Boden 4 verschweißt. Es hat querschnittsbetrachtet eine Spiralform, wodurch ein spiralförmiger Strömungskanal 46 gebildet ist, von dem in Figur 3 der Ausgang zu erkennen ist.

Durch das Leitelement 28 bzw. durch den Strömungskanal 46 wird das Öl auf seinem Strömungspfad vom Eingangsanschluss 22 zum Ausgangsanschluss 24 auf eine Kreisbewegung gelenkt, was die Entgasung des Öls beschleunigt.

Ergänzend zum gezeigten Ausführungsbeispiel kann ein (nicht gezeigter) Leitungsfilter vorgesehen sein. Dieser ist dem Eingangsanschluss 22 vor geschaltet und dient somit als Rücklauffilter.

Offenbart ist ein Ölbehälter, der ein im Wesentlichen kreiszylindrisches Gehäuse hat, in dem zumindest ein Leitelement aufgenommen ist, wodurch ein zumindest ansatzweise spiralförmiger Strömungskanal zur Entgasung von Öl gebildet ist. Dabei verläuft der Strömungskanal von einem etwa mittig an einem Boden des Gehäuses angeordneten Eingangsanschluss zu einem außermittig am Boden angeordneten Ausgangsanschluss. Erfindungsgemäß sind das Gehäuse und das Leitelement aus Metall gefertigt.

Offenbart ist weiterhin ein hydraulisches System mit einem derartigen Ölbehälter und mit einem dem Eingangsanschluss vor geschalteten Rücklauffilter, der vorzugsweise ein Leitungsfilter ist.

### Bezugszeichenliste

- 1: Mantel
- 2: Deckel
- 4: Boden
- 6: Schweißnaht
- 8: Halterung
- 10, 12: Hauptabschnitt
- 14, 16: Strebe
- 18, 20: überlappender Abschnitt
- 22: Eingangsanschluss
- 24: Ausgangsanschluss
- 26: Lecköl-Anschluss
- 28: Leitelement
- 30: Zwischendeckel
- 32: Vorratsbereich
- 34: Zentrifugalbereich
- 36: Durchgangsausnehmung
- 38: Lüftungsfilter
- 40: Füllstandssensor
- 42: Glasabschnitt
- 44: Einlaufverteilerkäfig
- 46: Strömungskanal

## Patentansprüche

1. Ölbehälter mit einem im Wesentlichen kreiszylindrischen Gehäuse (1, 2, 4), in dem zumindest ein Leitelement (28) aufgenommen ist, wodurch ein zumindest ansatzweise spiralförmiger Strömungskanal (46) zur Entgasung von Öl gebildet ist, wobei der Strömungskanal (46) von einem etwa mittig an einem Boden (4) des Gehäuses (1, 2, 4) angeordneten Eingangsanschluss (22) zu einem außermittig am Boden (4) angeordneten Ausgangsanschluss (24) verläuft, wobei das Leitelement (28) in einem Zentrifugalbereich (34) angeordnet ist, der durch einen Zwischendeckel (30) von einem Vorratsbereich (32) getrennt ist, **dadurch gekennzeichnet, dass** das Gehäuse (1, 2, 4) und das Leitelement (28) aus Metall gefertigt sind, wobei der Zwischendeckel (30) mit Durchgangsausnehmungen (36) versehen ist, und wobei ein elektrischer Füllstandssensor (40) zumindest abschnittsweise mittig im Vorratsbereich (32) angeordnet ist.

2. Ölbehälter nach Anspruch 1, wobei der Eingangsanschluss (22) oder der Ausgangsanschluss (24) von einer an den Boden geschweißten Standard-Flanschverbindung (22, 24) oder von einem an den Boden geschweißten Ring mit Innengewinde gebildet sind.

3. Ölbehälter nach Anspruch 1, wobei das Gehäuse (1, 2, 4) einen Mantel (1) hat, der von einem ursprünglich etwa rechteckigen gebogenen Blech gebildet ist, dessen beide kurze Seiten über eine Schweißnaht (6) miteinander verbunden sind, und dessen beide langen Seiten mit dem Boden (4) oder mit einem Deckel (2) des Gehäuses (1, 2, 4) verschweißt sind.

4. Ölbehälter nach Anspruch 1, wobei eine Halterung (8) über die gesamte Höhe des Gehäuses (1, 2, 4) an dieses geschweißt ist.

5. Ölbehälter nach Anspruch 3 und 4, wobei die Halterung (8) jeweils einen überlappenden Abschnitt (18, 20) mit dem Boden (4) und mit dem Deckel (2) hat.

6. Ölbehälter nach Anspruch 3 und 4, wobei die Halterung (8) im Bereich der Schweißnaht (6) angeordnet ist und zwei parallel zur Schweißnaht (6) angeordnete im Querschnitt etwa L-förmige Hauptabschnitte (10, 12) und zwei Streben (14, 16) hat, wobei die beiden überlappenden Abschnitte (18, 20) und die beiden Streben (14, 16) etwa quer zu den beiden Hauptabschnitten (10, 12) und etwa quer zu der Schweißnaht (6) angeordnet sind.

7. Ölbehälter nach Anspruch 1, wobei im Zentrifugalbereich (34) benachbart zum Eingangsanschluss (22) ein Einlaufverteilerkäfig (44) angeordnet ist, der von dem zumindest einen Leitelement (28) umfasst ist.

8. Ölbehälter nach Anspruch 1, wobei das Gehäuse (1, 2, 4) im Bereich des Vorratsbereichs (32) einen Glasabschnitt (42) aufweist.

9. Ölbehälter nach Anspruch 3, wobei in den Deckel (2) ein Lüftungsfilter (38) eingesetzt ist, über den ein Druck im Gehäuse (1, 2, 4) um etwa 0,2 bar gegenüber der Umgebung erhöht ist, und der ein Nachsaugen von Luft aus der Umgebung ermöglicht.

10. Hydraulisches System mit einem Ölbehälter nach einem der vorhergehenden Ansprüche und mit einem dem Eingangsanschluss (22) vorgeschalteten Rücklauffilter.

## Claims

1. Oil container having a substantially circular-cylindrical housing (1, 2, 4), in which at least one guiding element (28) is received, as a result of which a flow channel (46) which spirals at least to some extent is formed for degassing oil, the flow channel (46) running from an inlet connector (22) which is arranged approximately centrally on a bottom (4) of the housing (1, 2, 4) to an outlet connector (24) which is arranged eccentrically on the bottom (4), the guiding element (28) being arranged in a centrifugal region (34) which is separated from a supply region (32) by way of an intermediate cover (30), **characterized in that** the housing (1, 2, 4) and the guiding element (28) are manufactured from metal, the intermediate cover (30) being provided with passage recesses (36), and an electric filling level sensor (40) being arranged at least in sections centrally in the supply region (32).

2. Oil container according to Claim 1, the inlet connector (22) or the outlet connector (24) being formed by a standard flange connection (22, 24) which is welded to the bottom or by a ring with internal thread which is welded to the bottom.

3. Oil container according to Claim 1, the housing (1, 2, 4) having a casing (1) which is formed from an originally approximately rectangular bent metal sheet, the two short sides of which are connected to one another via a welded seam (6), and the two long sides of which are welded to the bottom (4) or to a cover (2) of the housing (1, 2, 4).

4. Oil container according to Claim 1, a holding device (8) being welded to the housing (1, 2, 4) over the entire height of the latter.

5. Oil container according to Claims 3 and 4, the holding device (8) having in each case one overlapping section (18, 20) with the bottom (4) and with the cover (2).

6. Oil container according to Claims 3 and 4, the holding device (8) being arranged in the region of the welded seam (6) and having two main sections (10, 12) of approximately L-shaped cross section which are arranged parallel to the welded seam (6), and two struts (14, 16), the two overlapping sections (18, 20) and the two struts (14, 16) being arranged approximately transversely with respect to the two main sections (10, 12) and approximately transversely with respect to the welded seam (6).

7. Oil container according to Claim 1, an inlet distributor cage (44) being arranged in the centrifugal region (34) adjacently with respect to the inlet connector (22), which inlet distributor cage (44) is enclosed by the at least one guiding element (28).

8. Oil container according to Claim 1, the housing (1, 2, 4) having a glass section (42) in the region of the supply region (32).

9. Oil container according to Claim 3, a ventilation filter (38) being inserted into the cover (2), via which ventilation filter (38) a pressure in the housing (1, 2, 4) is increased by approximately 0.2 bar with respect to the surroundings, and which makes replenishing of air from the surroundings possible.

10. Hydraulic system having an oil container according to one of the preceding claims and having a return filter which is connected upstream of the inlet connector (22).

## Revendications

1. Réservoir d'huile comprenant un boîtier (1, 2, 4) essentiellement cylindrique circulaire, dans lequel est reçu au moins un élément de guidage (28), de sorte qu'un canal d'écoulement au moins au début en forme de spirale (46) soit formé pour le dégazage de l'huile, le canal d'écoulement (46) s'étendant depuis un raccord d'entrée (22) disposé approximativement centralement au niveau d'un fond (4) du boîtier (1, 2, 4) jusqu'à un raccord de sortie (24) disposé de manière excentrée au niveau du fond (4), l'élément de guidage (28) étant disposé dans une région centrifuge (34) qui est séparée d'une région de stockage (32) par un couvercle intermédiaire (30), **caractérisé en ce que** le boîtier (1, 2, 4) et l'élément de guidage (28) sont fabriqués en métal, le couvercle intermédiaire (30) étant pourvu d'évidements de passage (36) et un capteur électrique de niveau de remplissage (40) étant disposé au moins en partie centralement dans la région de stockage (32).

2. Réservoir d'huile selon la revendication 1, dans lequel le raccord d'entrée (22) ou le raccord de sortie (24) sont formés par une connexion à bride standard (22, 24) soudée au fond ou par une bague avec un filetage interne soudée au fond.

3. Réservoir d'huile selon la revendication 1, dans lequel le boîtier (1, 2, 4) présente une enveloppe (1) qui est formée par une tôle initialement pliée approximativement sous forme rectangulaire, dont les deux côtés courts sont reliés l'un à l'autre par le biais d'un joint de soudure (6) et dont les deux côtés longs sont soudés au fond (4) ou à un couvercle (2) du boîtier (1, 2, 4).

4. Réservoir d'huile selon la revendication 1, dans lequel une fixation (8) est fixée au boîtier (1, 2, 4) sur toute la hauteur de celui-ci.

5. Réservoir d'huile selon la revendication 3 et 4, dans lequel la fixation (8) présente à chaque fois une portion de chevauchement (18, 20) avec le fond (4) et avec le couvercle (2).

6. Réservoir d'huile selon les revendications 3 et 4, dans lequel la fixation (8) est disposée dans la région du joint de soudure (6) et présente deux portions principales approximativement en forme de L en section transversale (10, 12), disposées parallèlement au joint de soudure (6), et deux entretoises (14, 16), les deux portions se chevauchant (18, 20) et les deux entretoises (14, 16) étant disposées approximativement transversalement aux deux portions principales (10, 12) et approximativement transversalement au joint de soudure (6).

7. Réservoir d'huile selon la revendication 1, dans lequel, dans la région centrifuge (34), est disposée, à côté du raccord d'entrée (22) une cage de distribution d'entrée (44) qui est entourée par l'au moins un élément de guidage (28).

8. Réservoir d'huile selon la revendication 1, dans lequel le boîtier (1, 2, 4) présente une portion en verre (42) dans la région de la région de stockage (32).

9. Réservoir d'huile selon la revendication 3, dans lequel, un filtre de ventilation (38) est inséré dans le couvercle (2), par le biais duquel une pression dans le boîtier (1, 2, 4) est augmentée d'environ 0,2 bar par rapport à l'environnement, et qui permet une réaspiration d'air à partir de l'environnement.

10. Système hydraulique comprenant un réservoir d'huile selon l'une quelconque des revendications précédentes et comprenant un filtre de retour monté en amont du raccord d'entrée (22).
